# EUROPEAN PATENT SPECIFICATION

(11) **EP 3 916 969 B1**
(45) Date of publication and mention of the grant of the patent: **03.05.2023**
(21) Application number: 21166603.7
(22) Date of filing: 01.04.2021
(51) Int. Cl.: H02K 15/02, H02K 15/12

(54) **METHOD FOR MANUFACTURING LAMINATED IRON CORE**
VERFAHREN ZUR HERSTELLUNG EINES LAMINIERTEN EISENKERNS
PROCÉDÉ DE FABRICATION DE NOYAU DE FER STRATIFIÉ

(30) Priority: 26.05.2020 JP 2020091476
(43) Date of publication of application: 01.12.2021
(73) Proprietor: Nidec Corporation, Kyoto-shi, Kyoto 601-8205 (JP)
(72) Inventor: SASAKI, Ryoma, Kyoto, 601-8205 (JP); MAEDA, Shigeru, Kyoto, 601-8205 (JP); NISHIYAMA, Nana, Kyoto, 601-8205 (JP)
(74) Representative: Stöckeler, Ferdinand

(56) References cited:
- WO-A1-2020/045937
- JP-A- 2015 136 228
- US-A1- 2016 329 783

## Description

### Technical Field

The present invention relates to a method for manufacturing a laminated iron core incorporated in, for example, a motor.

### Background Art

As a conventionally known method for manufacturing a laminated iron core, a method for laminating a plurality of punched steel plates by crimping or welding is mainly used. However, in such methods, connection portions of the steel plates become conductive to cause iron loss.

Iron loss may cause deterioration in characteristics of a motor or the like. In order to address improvement of the characteristics, steel plates have been reduced in thickness, or development of new materials has been carried out. Further, a glue lamination process with less iron loss has been developed in recent years.

JP H11 308821 A discloses a method for manufacturing a laminated iron core. Specifically, iron core pieces each having an iron core piece body and a joint part protruding from the iron core piece body are formed by punching material plates coated with a thermosetting adhesive on the surface, a prescribed number of iron core pieces are connected and laminated by connecting the joint parts of the iron core pieces to each other by crimping, and then, the thermosetting adhesive is cured to bond the iron core pieces.

JP 2003 309952 A discloses a method for manufacturing an amorphous laminated iron core, the method including: punching an iron core piece from an amorphous thin plate material; and injecting an adhesive linking agent into a connection hole formed in the iron core piece so as to fill the connection hole with the adhesive linking agent.

WO 2020/045937 A1 describes a motor comprising a shaft, a rotor engaged with the shaft, and a stator disposed outside the rotor. The stator includes a stator core formed by stacking a plurality of sheets and a coil wound around the stator core. The stator core includes a yoke having a hole formed therein. A tooth protrudes radially from the yoke and an adhesive member is disposed in the hole. The hole is disposed on an imaginary line extending radially along the side of the tooth.

JP 2015 136228 A describes a laminated core coupling a plurality of split laminated cores punched from a magnetic steel sheet, and consisting of a back yoke and teeth projecting therefrom. A groove extending in the axial direction of the laminated core is formed in the inner peripheral surface at the tip of a split lamination teeth where the teeth are laminated, and the laminations at least of the split lamination teeth are bonded with an adhesive.

The glue lamination process disclosed in JP H11 308821 A is based on a method for laminating steel plates, which are cut into a predetermined shape using a molding device equipped with a die and a punch, with an adhesive applied to the steel plates. However, problems remain in the method for applying the adhesive during lamination.

That is, in the glue lamination process by applying an adhesive, when the steel plates are pressurized after the application, the adhesive protrudes, and the protruding adhesive may adhere to a jig or a mold, which may cause deformation of a laminated product, etc., as well as damage on the mold and the jig. Therefore, there arises a problem that the frequency of defects during production increases, and the product yield also deteriorates.

The method disclosed in JP 2003 309952 A is devised in consideration of difficulty in laminating amorphous thin plate materials. This method is advantageous in that cracks and the like do not occur. However, the connection hole formed in the iron core body is used as a bonding hole, which may cause interruption of a magnetic path or magnetic saturation in the laminate. Therefore, when a laminated iron core manufactured by the method disclosed in JP 2003 309952 A is used for, for example, a motor, it is considered that the motor characteristics are deteriorated.

### Summary of Invention

It is an object of the present invention is to provide a method for manufacturing a laminated iron core by a glue lamination process with less iron loss and a laminate for obtaining a laminated iron core.

This object is achieved by a method according to claim 1, and by a laminate according to claim 10.

### Advantageous Effects of Invention

According to the present invention, the adhesive can be uniformly permeated between the steel plates constituting the laminate by utilizing capillary action, whereby it is possible to reduce iron loss and reduce the thickness of the laminate in the lamination direction.

### Brief Description of Drawings

Fig. 1 is a diagram for describing a manufacturing process of a laminated iron core according to an embodiment of the present invention.
Fig. 2 is an enlarged view of a protruding piece formed on an iron core piece.
Fig. 3 is an enlarged view of a tooth portion of a laminated iron core formed by laminating a plurality of iron core pieces.
Fig. 4 is a diagram schematically showing how an adhesive permeates into the laminated iron core.
Fig. 5 is a diagram showing an example of fracture surfaces remaining on tip surfaces of teeth after protruding parts are removed.
Fig. 6A is a diagram showing an example of arrangement of holes to be filled with an adhesive.
Fig. 6B is a diagram showing another example of arrangement of holes to be filled with an adhesive.
Fig. 6C is a diagram showing another example of arrangement of holes to be filled with an adhesive.
Fig. 7 is a diagram showing an example in which an adhesive is permeated into each layer of a laminate divided into three layers, which are an upper layer, a middle layer, and a lower layer.
Fig. 8 is a diagram for describing a manufacturing process of a laminated iron core having no gate parts.

### Description of Embodiments

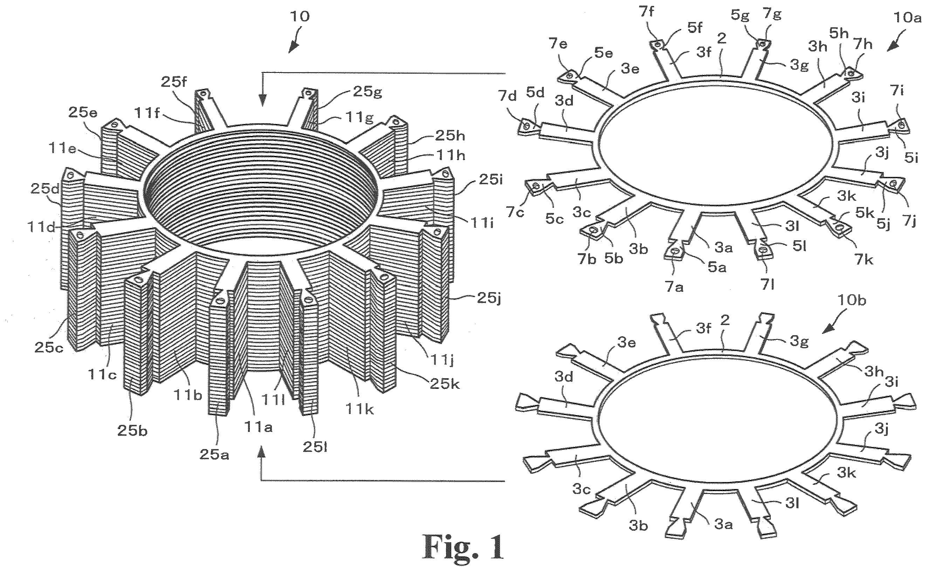

An embodiment of the present invention will be described in detail below with reference to the accompanying drawings. Fig. 1 is a diagram for describing a manufacturing process of a laminated iron core according to the present embodiment. As shown in Fig. 1, a laminated iron core 10 is manufactured by laminating multiple iron core pieces 10a in a plate thickness direction. Each of the iron core pieces 10a is a material to be processed and is obtained by cutting out an electromagnetic steel plate into a predetermined shape by pressing, laser processing, wire cutting, or the like. That is, the laminated iron core 10 is a laminate in which multiple iron core pieces 10a having the same shape in a plan view are placed in a jig or a mold and laminated.

The laminated iron core 10 is, for example, a stator core of a motor. Each of the plurality of iron core pieces 10a has tooth pieces 3a to 31 extending outward in the radial direction of the motor from a core main body 2. Protruding pieces 5a to 51 are formed at the tip parts (opposite to the side connected to the core main body 2) of the tooth pieces 3a to 31, and through holes 7a to 71 are formed in the protruding pieces 5a to 51.

As shown in Fig. 1, the tooth pieces 3a to 31 constitute teeth 11a to 111 of the laminated iron core 10 (stator core) after lamination.

Further, in the laminated iron core 10, an iron core piece 10b having no through hole in the protruding piece is used as the iron core piece in the lowermost layer of the laminate in order to form a filling hole for an adhesive described later, as shown in Fig. 1.

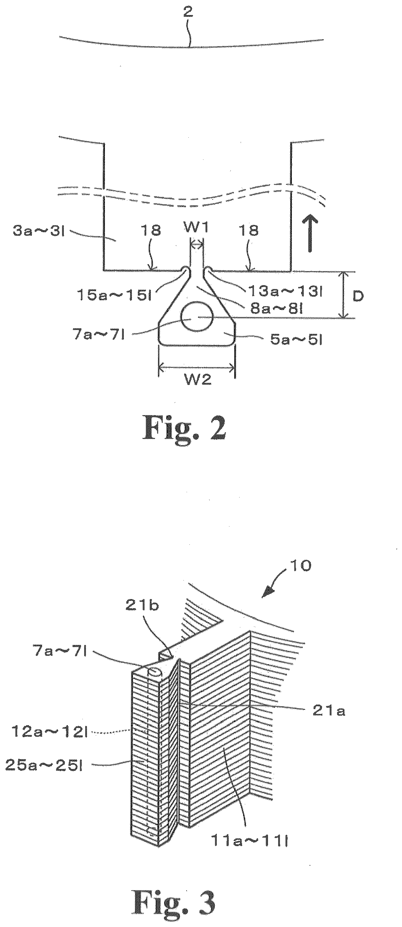

Fig. 2 is an enlarged view of the protruding pieces 5a to 51. Further, Fig. 3 is an enlarged view of a tooth portion of the laminated iron core 10 formed by laminating a plurality of iron core pieces 10a.

As shown in Fig. 2, the protruding pieces 5a to 51 are joined to the tooth pieces 3a to 31 protruding from the core main body 2 of the laminated iron core 10 via joint parts 8a to 81. The joint parts 8a to 81 each have a shape in which, when viewed from the lamination direction (plan view), the width in a direction orthogonal to the protrusion direction of the protruding pieces 5a to 51 (direction indicated by an arrow in the figure) gradually decreases toward the core main body 2 (W1 < W2).

Connection parts between the joint parts 8a to 81 and the tooth pieces 3a to 31 (portions of the joint parts closest to the tooth pieces) are referred to as gate parts. Recesses 13a to 131 and 15a to 151 are formed at both ends of the gate parts. The recesses 13a to 131 and 15a to 151 are substantially semicircular in plan view and are recessed toward the core main body 2 with respect to outermost surfaces 18 of the tooth pieces 3a to 31.

When the iron core pieces 10a are laminated, groove-shaped recessed parts 21a and 21b extending in the lamination direction from the top to the bottom of the laminated iron core 10 are formed by the recesses 13a to 131 and 15a to 151 as shown in Fig. 3.

Further, because the iron core piece in the lowermost layer of the laminated iron core 10 does not have a through hole as described above, holes (bottomed holes) 12a to 121 which are open on one side, closed on the other side, and serve as filling holes for the adhesive are formed in protruding parts 25a to 251 of the teeth 11a to 111 as shown in Fig. 3. The open side of each hole is defined as an adhesive injection port (introduction port), and the adhesive can be prevented from flowing out to the outside by being accumulated in the hole due to the closing side.

Regarding the positions of the through holes 7a to 71 formed in the protruding pieces 5a to 5l, that is, a distance D from the outermost surface 18 of each of the tooth pieces 3a to 31 to the corresponding one of the through holes 7a to 71 is reduced in consideration of the permeation rate of the adhesive, as long as the gate part which is a connection part between the protruding part and the tooth can be ensured. Specifically, the through hole is formed as close to the tooth piece as possible. In addition, the through holes 7a to 7l are also formed at positions at which certain diameters can be obtained from the viewpoint of ensuring the holes 12a to 121 capable of sufficiently storing the adhesive required for permeation, which will be described later.

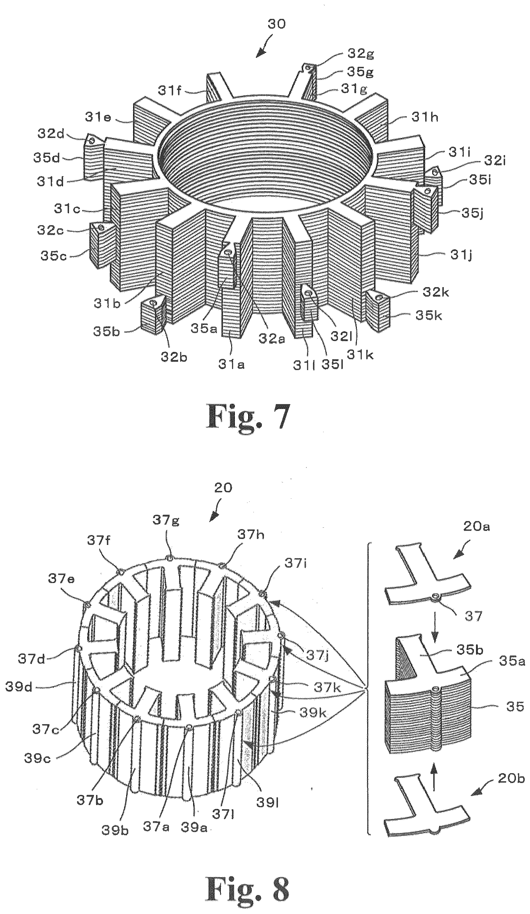

In a case where the holes can be formed at positions where the effect of magnetic saturation can be minimized due to the protruding parts having holes being formed integrally with the main body of the laminate, it is possible to permeate the adhesive without providing the gate parts as shown in Fig. 8, for example. In addition, the hole parts can be used as rotation prevention parts or positioning parts for adjacent components during assembly of the motor.

That is, a laminated iron core 20 (stator core) shown in Fig. 8 has a configuration in which multiple (twelve) split stators 35 are connected in the circumferential direction of a central axis. Each of the split stators 35 has an annular yoke part 35a extending in the circumferential direction and surrounding a rotor, and a tooth part 35b extending toward the central axis of the stator core from the yoke part 35a.

The laminated iron core 20 is not provided with gate parts, and has through holes 37a to 37l serving as filling holes for the adhesive on the outer edge. The through holes 37a to 37l are formed such that an iron core piece 20b having no through hole is placed in the lowermost layer of the laminated iron core 20, and iron core pieces 20a provided with through holes 37 are laminated on the iron core piece 20b. Portions 39a to 39l protruding to the outer edge of the laminated iron core 20 in peripheral edges of the through holes 37a to 37l function as the abovementioned rotation prevention parts.

If crimped parts for crimping and fixing a plurality of steel plates are provided, the number of holes to be provided in the laminate is at least the same as or greater than the number of crimped parts. This configuration enables efficient permeation of the adhesive between the steel plates from a plurality of directions.

### <Permeation of adhesive>

Next, a method for permeating the adhesive into the laminated iron core according to the present embodiment will be described. Here, the holes 12a to 12l formed in the laminated iron core 10 are filled with an adhesive by an injector (not shown), and the adhesive is permeated between the layers of a plurality of laminated iron core pieces 10a including the tooth pieces 3a to 31.

The adhesive may be simultaneously injected into all holes 12a to 12l, or may be sequentially injected in the circumferential direction of the circular core main body 2. Alternatively, the adhesive may be sequentially injected into each of pairs including two holes facing each other across the main body 2.

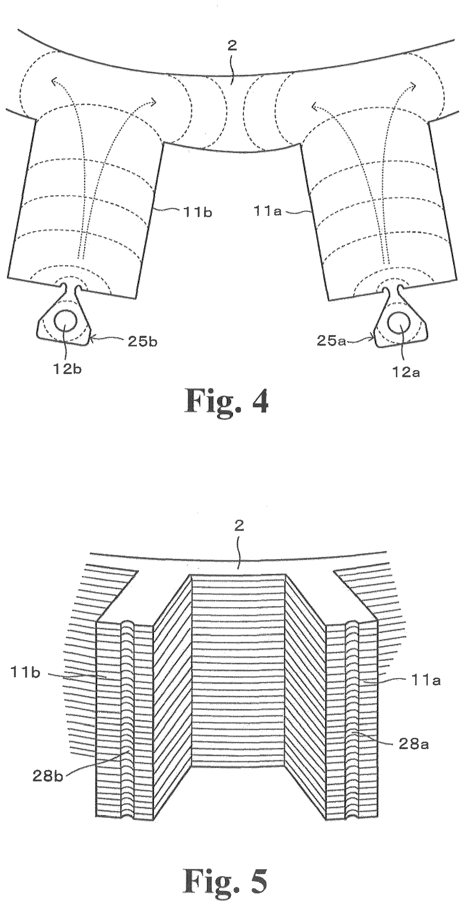

Fig. 4 schematically shows how the adhesive permeates into the laminated iron core. Fig. 4 shows only the teeth 11a and 11b of the laminated iron core 10 for the sake of simplicity. For example, when the holes 12a and 12b are filled with the adhesive, the holes 12a and 12b function as a liquid reservoir.

In the laminated iron core 10, multiple iron core pieces are laminated adjacent to each other while maintaining a surface contact state. Therefore, the adhesive permeates into a gap between the iron core pieces by capillary action from the holes 12a and 12b as a starting point (source) to the core main body 2 via the protruding pieces 5a and 5b and the teeth 11a and 11b, as indicated by a dotted line in Fig. 4.

That is, the joint parts 8a to 8l serve as supply paths of the adhesive from the holes 12a and 12b to the gap between the steel plates, and the adhesive injected into the holes 12a and 12b permeates and spreads between the iron core pieces along the shapes of the protruding pieces 5a and 5b, the teeth 11a and 11b, and the like, due to capillary action as shown in Fig. 4. Thus, the adhesive permeates into the protruding pieces 5a and 5b, the teeth 11a and 11b, and the like. Then, the laminate in which, after the permeating adhesive is cured, the electromagnetic steel plates constituting the laminate are joined (tightened) with a prescribed force or more is released and obtained as a finished product.

Here, a low-viscosity adhesive is used in order to permeate the adhesive by capillary action. For example, AE-780 with a viscosity of 9 Pa·s or an adhesive having lower viscosity than AE-780 is used. Further, the adhesive before injection may be pressed and crushed to give fluidity. Depending on the type of adhesive to be used, the adhesive may be cured by heating or the like after permeation.

When the laminated iron core 10 in which the adhesive does not uniformly permeate into the protruding pieces 5a and 5b, the teeth 11a and 11b, and the core main body 2 of the laminated iron core 10 is used for, for example, a rotor or the like of the motor, it is assumed that vibration may occur during rotation of the motor due to non-uniformity of the adhesive. In view of this, for example, an adhesive absorbing means may be provided on the outer wall of the laminate between the teeth as a means for checking the completion of permeation of the adhesive into the laminate of the iron core pieces, and it may be determined that the permeation of the adhesive has been completed when the adhesive permeates into the adhesive absorbing means.

Alternatively, a fluorescent substance may be added to the adhesive in advance, and whether or not the adhesive reaches the outer wall of the laminate may be checked using the fluorescent reaction with black light.

### <Removal of protruding part>

The laminated iron core 10 according to the present embodiment constituted by the laminate of multiple iron core pieces 10a has groove-shaped recessed parts 21a and 21b, which are constituted by the recesses 13a to 131 and 15a to 15l shown in Fig. 2 and which extend in the lamination direction, at the connection parts between the protruding parts 25a and 25b and the teeth 11a and 11b (see Fig. 3). Thus, the connection part (gate part) between the protruding part and the tooth has a narrow width (width in the circumferential direction), and thus is long in the lamination direction.

Therefore, after the adhesive is cured, the gate parts fracture by applying a predetermined force to the protruding parts 25a and 25b from the circumferential direction of the laminated iron core 10, whereby the protruding parts 25a and 25b can be easily separated (removed) from the teeth 11a and 11b.

Fig. 5 shows an example of fracture surfaces remaining on the tip surfaces of the teeth 11a and 11b after the protruding parts 25a and 25b are removed. Since the lateral width of each gate part is reduced as described above, no iron core pieces remain in fracture portions 28a and 28b as shown in Fig. 5. Thus, the protruding parts 25a and 25b can be removed with the fracture surfaces not protruding from the end faces of the teeth 11a and 11b (not protruding from the surface of the product).

Accordingly, after the protruding parts 25a and 25b are removed, the fracture surfaces do not protrude from the outermost wall surface of the laminate, so that the laminate can be smoothly placed into a storage case.

As described above, the method for manufacturing a laminated iron core according to the present embodiment includes: injecting an adhesive into a hole part formed so as to extend in a lamination direction of a laminate obtained by laminating a plurality of steel plates having a plurality of holes; and permeating the adhesive between the adjacent steel plates of the laminate. With this method, the adhesive can be uniformly permeated into a thin layer form between the steel plates constituting the laminate, whereby the thickness of the laminate (laminated iron core) in the lamination direction can be reduced, and the thin steel plates can be reliably laminated.

Further, the permeation step can be simplified by using capillary action which occurs between the adjacent steel plates of the laminate when the adhesive is permeated between the steel plates. In addition, the thickness of the adhesive is smaller (for example, 1 µm or less) than that of the adhesive formed by coating, and it is possible to prevent the adhesive from being unevenly permeated. Thus, for example, the space factor of the core in the motor is increased, and the height of the motor can be reduced even if the number of laminated steel plates is increased.

As a result, eddy current in the steel plates of the laminated iron core can be reduced to decrease energy loss due to eddy current loss, and further, iron loss can be reduced because a resin layer formed by the adhesive serves as an insulator between the steel plates. Further, the adhesive can be permeated with a simple structure, whereby the mass productivity of the laminated iron core is improved.

Furthermore, it is not necessary to pressurize the steel plates to permeate the adhesive between the steel plates, which can prevent the adhesive from protruding and adhering to the jig, the mold, or the like.

In addition, the protruding parts provided with the filling holes for the adhesive are formed into a shape that facilitates removal of the protruding parts from the main body of the laminate and the protruding parts are removed after the adhesive is cured. Therefore, the cause for interruption of the magnetic path and the magnetic saturation of the laminate can be eliminated, and deterioration in characteristics of the motor or the like using the laminate can be prevented. Further, each of the protruding parts has a shape satisfying the minimum required function, considering that the protruding parts are members to be discarded after removal. Thus, a steel plate material can be saved in terms of use amount.

The present invention is not limited to the above embodiment, and various modifications are possible.

### <First Modification>

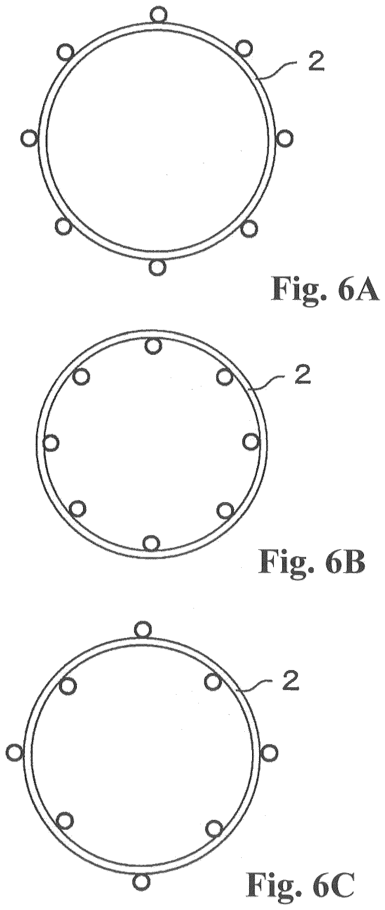

The holes to be filled with an adhesive extending in the lamination direction are not limited to be arranged outside the core main body 2 in the radial direction (this arrangement is described in the above embodiment) as indicated by small circles in Fig. 6A. For example, they may be arranged inside the core main body 2 in the radial direction as shown in Fig. 6B. Alternatively, they may be arranged both outside and inside the core main body 2 in the radial direction as shown in Fig. 6C. In other words, the holes can be arranged according to the application of the laminate, the mounting location in the product, and the like.

### <Second Modification>

When the laminate is thick in the lamination direction due to a large number of laminated iron core pieces, the filling holes for an adhesive formed in the laminated iron core are also deep, and it is assumed that the injected adhesive does not easily reach the lower layer portion of the holes.

In view of this, unlike the abovementioned embodiment, iron core pieces provided with through holes in protruding pieces are laminated in all layers including the lowermost layer such that filling holes penetrating from the uppermost layer to the lowermost layer are formed. Then, the lowermost layers of the holes are closed, and the adhesive is injected from the openings in the uppermost layers of the holes. After the holes are filled with the adhesive to some extent, the openings in the uppermost layers of the holes are closed, and the adhesive is injected from the openings in the lowermost layers of the holes. Thus, the adhesive fills such deep holes formed in a thick laminate.

Further, as a measure to address a thick laminate, for example, the iron core piece 10b shown in Fig. 1 having no through holes in the protruding pieces is used in an intermediate layer of the laminate, and the iron core pieces 10a having through holes in the protruding pieces are used for laminates laminated on and under the iron core piece 10b. With this configuration, the adhesive can be injected from openings of holes formed in one of the laminates and openings of holes formed in the other of the laminates across the iron core piece 10b.

### <Third Modification>

As a further measure to address a thick laminate, the thick laminate may be divided into a plurality of laminates each having a smaller number of laminated iron core pieces, and the plurality of laminates may be combined (laminated in the lamination direction) after the adhesive is injected from openings of holes formed in each of the divided laminates. With this configuration, the adhesive can be quickly and reliably injected from the openings of the holes in each of the divided laminates.

### <Fourth Modification>

The above embodiment has a configuration in which, in all the teeth, the adhesive injected into the holes formed in the protruding parts is permeated into all the layers. However, the present invention is not limited thereto. For example, a laminated iron core 30 in Fig. 7 is configured such that the laminate is divided into three layers, which are an upper layer, a middle layer, and a lower layer, and the adhesive may be permeated into each of the three layers.

Specifically, teeth 31a, 31d, 31g, and 31j (group 1) are made to correspond to the upper layer of the laminate, teeth 31c, 31f, 31i, and 311 (group 2) are made to correspond to the middle layer of the laminate, and teeth 31b, 31e, 31h, and 31k (group 3) are made to correspond to the lower layer of the laminate. Protruding parts 35a, 35d, 35g, and 35j at the tips of the teeth in group 1 are formed with holes for permeating the adhesive into the upper layer.

Similarly, protruding parts 35c, 35f, 35i, and 351 at the tips of the teeth in group 2 are formed with holes for permeating the adhesive into the middle layer, and protruding parts 35b, 35e, 35h, and 35k at the tips of the teeth in group 3 are formed with holes for permeating the adhesive into the lower layer.

With this configuration, when the adhesive is injected into the holes 32a to 321, the adhesive can be quickly permeated into each of the upper layer, the middle layer, and the lower layer. Further, in the laminated iron core 30 in Fig. 7, the length of the protruding part in the lamination direction is short, so that the length of the connection part (gate part) between the protruding part and the tooth is also short in the lamination direction. Therefore, after the adhesive is cured, the protruding parts can be separated by a slight external force, which facilitates the removal of the protruding parts.

The method for manufacturing the laminated iron core 10 described above can be applied not only to a stator (stator) of the motor but also to a rotor (rotor) of the motor. Therefore, it is possible to manufacture a motor with reduced eddy current loss by using a laminated iron core which is thin in the lamination direction.

### Reference Signs List

- 2: core main body
- 3a to 3l: tooth piece
- 5a to 5l: protruding piece
- 7a to 7l, 37a to 37l: through hole
- 8a to 8l: joint part
- 10, 20: laminated iron core
- 10a, 10b, 20a, 20b: iron core piece
- 11a to 11l: tooth
- 12a to 12l: hole
- 13a to 131, 15a to 151: recess
- 25a to 251: protruding part
- 35: split stator

## Claims

1. A method for manufacturing a laminated iron core (10, 30), the method comprising:
a step for forming a laminate by laminating a plurality of steel plates (10a, 10b) having a plurality of holes (7a to 71, 37a to 371);
a step for injecting an adhesive into a hole part (12a to 121) constituted by the plurality of holes (7a to 71, 37a to 371) being continuous in a lamination direction of the laminate; and
a step for permeating the injected adhesive between the steel plates adjacent to each other in the laminate,
wherein the adhesive is permeated to spread between the steel plates adjacent to each other in the laminate using capillary action that occurs between the steel plates,
**characterized in that**
the hole part (12a to 12l) is formed in a protruding part (25a to 251) provided at a position distant from a main body (2) of the laminate, and the protruding part (25a to 251) is removable.

2. The method for manufacturing a laminated iron core (10, 30) according to claim 1, **characterized in that** the protruding part (25a to 251) and the main body (2) of the laminate are connected to each other at a joint part (8a to 81) having a width smaller than a width of the protruding part (25a to 251) in a circumferential direction of the laminate.

3. The method for manufacturing a laminated iron core (10, 30) according to claim 2, **characterized in that** the joint part (8a to 81) has a shape that gradually decreases toward the main body (2) of the laminate in a width direction when viewed in the lamination direction of the laminate.

4. The method for manufacturing a laminated iron core (10, 30) according to any one of claims 1 to 3, **characterized in that** groove-shaped recessed parts (21a, 21b) that are recessed toward inside of the main body (2) from an outer wall surface of the main body (2) are formed at both ends of a portion where the protruding part (25a to 251) is connected to the main body (2) of the laminate.

5. The method for manufacturing a laminated iron core (10, 30) according to any one of claims 1 to 4, **characterized in that** the hole part (12a to 121) is open in one end and closed in the other end.

6. The method for manufacturing a laminated iron core (10, 30) according to any one of claims 1 to 5, **characterized in that**, when a crimped part for crimping and fixing the plurality of steel plates (10a, 10b) is provided, the number of the hole parts (12a to 121) is at least the same as or greater than the number of the crimped parts.

7. The method for manufacturing a laminated iron core (10, 30) according to any one of claims 4 to 6, **characterized in that** the hole part (12a to 121) is provided on a circumferential surface of an outer wall of the main body (2) of the laminate, a circumferential surface of an inner wall of the laminate, or both the circumferential surface of the outer wall and the circumferential surface of the inner wall.

8. The method for manufacturing a laminated iron core (10, 30) according to any one of claims 1 to 7, **characterized in that** the laminated iron core (10, 30) has teeth (11a to 111), each protruding part (25a to 251) being arranged outward of each tooth (11a to 111).

9. The method for manufacturing a laminated iron core (10, 30) according to any one of claims 1 to 8, **characterized in that** the laminated iron core (10, 30) is used as a rotor of a motor or a stator of a motor.

10. A laminate for obtaining a laminated iron core (10, 30), the laminate comprising:
a plurality of laminated steel plates (10a, 10b),
a plurality of hole parts (12a to 121) which extend in a lamination direction of the laminate, which are located at positions distant from a main body (2) of the laminate and which are filled with an adhesive, the plurality of steel plates (10a, 10b) being bonded to each other by permeating the adhesive between the steel plates adjacent to each other using capillary action that occurs between the plurality of steel plates,
**characterized in that**
the plurality of hole parts (12a to 12l) are formed in respective protruding parts (25a to 251) provided at a position distant from a main body (2) of the laminate, and the protruding parts (25a to 251) is removable.

11. The laminate according to claim 10, **characterized in that** the laminated iron core (10, 30) constitutes a rotor core or a stator core of a motor.

12. A motor **characterized by** using the laminated iron core (10, 30) obtained from the laminate according to claim 10.

## Patentansprüche

1. . Ein Verfahren zum Herstellen eines laminierten Eisenkerns (10, 30), wobei das Verfahren folgende Schritte aufweist:
einen Schritt zum Bilden eines Laminats durch Laminieren einer Mehrzahl von Stahlplatten (10a, 10b) mit einer Mehrzahl von Löchern (7a bis 7l, 37a bis 37l);
einen Schritt zum Injizieren eines Haftmittels in ein Lochteil (12a bis 12l), das durch die Mehrzahl von Löchern (7a bis 7l, 37a bis 37l) gebildet wird, die in einer Laminierungsrichtung des Laminats fortlaufend sind; und
einen Schritt zum Verbreiten des injizierten Haftmittels zwischen den Stahlplatten, die in dem Laminat benachbart zueinander sind,
wobei das Haftmittel unter Verwendung einer Kapillarwirkung, die zwischen den Stahlplatten auftritt, verbreitet wird, um sich zwischen den Stahlplatten auszubreiten, die in dem Laminat benachbart zueinander sind,
**dadurch gekennzeichnet, dass**
das Lochteil (12a bis 12l) in einem vorstehenden Teil (25a bis 25l) gebildet ist, das an einer Position entfernt von einem Hauptkörper (2) des Laminats vorgesehen ist, und das vorstehende Teil (25a bis 25l) entfernbar ist.

2. . Das Verfahren zum Herstellen eines laminierten Eisenkerns (10, 30) gemäß Anspruch 1, **dadurch gekennzeichnet, dass** das vorstehende Teil (25a bis 25I) und der Hauptkörper (2) des Laminats an einem Verbindungsteil (8a bis 8l) miteinander verbunden sind, das eine Breite aufweist, die geringer ist als eine Breite des vorstehenden Teils (25a bis 25I) in einer Umfangsrichtung des Laminats.

3. . Das Verfahren zum Herstellen eines laminierten Eisenkerns (10, 30) gemäß Anspruch 2, **dadurch gekennzeichnet, dass** das Verbindungsteil (8a bis 8l) eine Form aufweist, die sich in einer Breiterichtung zu dem Hauptkörper (2) des Laminats hin allmählich verringert, in der Laminierrichtung des Laminats gesehen.

4. . Das Verfahren zum Herstellen eines laminierten Eisenkerns (10, 30) gemäß einem der Ansprüche 1 bis 3, **dadurch gekennzeichnet, dass** die rillenförmigen ausgenommenen Teile (21a, 21b), die von einer Außenwandoberfläche des Hauptkörpers (2) zu einer Innenseite des Hauptkörpers (2) hin ausgenommen sind, an beiden Enden eines Abschnitts gebildet sind, wo das vorstehende Teil (25a bis 25I) mit dem Hauptkörper (2) des Laminats verbunden ist.

5. . Das Verfahren zum Herstellen eines laminierten Eisenkerns (10, 30) gemäß einem der Ansprüche 1 bis 4, **dadurch gekennzeichnet, dass** das Lochteil (12a bis 12l) in einem Ende geöffnet ist und in dem anderen Ende geschlossen ist.

6. . Das Verfahren zum Herstellen eines laminierten Eisenkerns (10, 30) gemäß einem der Ansprüche 1 bis 5, **dadurch gekennzeichnet, dass**, wenn ein Quetschteil zum Quetschen und Fixieren der Mehrzahl von Stahlplatten (10a, 10b) vorgesehen ist, die Anzahl der Lochteile (12a bis 12l) zumindest gleich wie oder größer als die Anzahl der Quetschteile ist.

7. . Das Verfahren zum Herstellen eines laminierten Eisenkerns (10, 30) gemäß einem der Ansprüche 4 bis 6, **dadurch gekennzeichnet, dass** das Lochteil (12a bis 12l) an einer Umfangsoberfläche einer Außenwand des Hauptkörpers (2) des Laminats, einer Umfangsoberfläche einer Innenwand des Laminats, oder sowohl der Umfangsoberfläche der Außenwand als auch der Umfangsoberfläche der Innenwand vorgesehen ist.

8. . Das Verfahren zum Herstellen eines laminierten Eisenkerns (10, 30) gemäß einem der Ansprüche 1 bis 7, **dadurch gekennzeichnet, dass** der laminierte Eisenkern (10, 30) Zähne (11a bis 11l) aufweist, wobei jedes vorstehende Teil (25a bis 25l) außerhalb jedes Zahns (11a bis 11l) angeordnet ist.

9. . Das Verfahren zum Herstellen eines laminierten Eisenkerns (10, 30) gemäß einem der Ansprüche 1 bis 8, **dadurch gekennzeichnet, dass** der laminierte Eisenkern (10, 30) als ein Rotor eines Motors oder ein Stator eines Motors verwendet wird.

10. . Ein Laminat zum Erhalten eines laminierten Eisenkerns (10, 30), wobei das Laminat folgende Merkmale aufweist:
eine Mehrzahl von laminierten Stahlplatten (10a, 10b),
eine Mehrzahl von Lochteilen (12a bis 12l), die sich in einer Laminierrichtung des Laminats erstrecken, die sich an Positionen entfernt von einem Hauptkörper (2) des Laminats befinden und die mit einem Haftmittel gefüllt sind, wobei die Mehrzahl von Stahlplatten (10a, 10b) miteinander verbunden sind durch Verbreiten des Haftmittels zwischen den Stahlplatten, die benachbart zueinander sind, unter Verwendung einer Kapillarwirkung, die zwischen der Mehrzahl von Stahlplatten auftritt,
**dadurch gekennzeichnet, dass**
die Mehrzahl von Lochteilen (12a bis 12l) in jeweiligen vorstehenden Teilen (25a bis 25l) gebildet sind, die an einer Position entfernt von einem Hauptkörper (2) des Laminats vorgesehen sind, und die vorstehenden Teile (25a bis 25l) entfernbar sind.

11. . Das Laminat gemäß Anspruch 10, **dadurch gekennzeichnet, dass** der laminierte Eisenkern (10, 30) einen Rotorkern oder einen Statorkern eines Motors bildet.

12. . Ein Motor, **dadurch gekennzeichnet, dass** derselbe den laminierten Eisenkern (10, 30) verwendet, der von dem Laminat gemäß Anspruch 10 erhalten wird.

## Revendications

1. Procédé de fabrication d'un noyau de fer stratifié (10, 30), le procédé comprenant:
une étape consistant à former un stratifié en stratifiant une pluralité de plaques d'acier (10a, 10b) présentant une pluralité de trous (7a à 71, 37a à 371);
une étape consistant à injecter un adhésif dans une partie de trous (12a à 121) constituée par la pluralité de trous (7a à 71, 37a à 371) qui sont continus dans une direction de stratification du stratifié; et
une étape consistant à imprégner l'adhésif injecté entre les plaques d'acier adjacentes l'une à l'autre dans le stratifié,
dans lequel l'adhésif est imprégné de manière à se répandre entre les plaques d'acier adjacentes l'une à l'autre dans le stratifié à l'aide d'une action capillaire qui se produit entre les plaques d'acier,
**caractérisé par le fait que**
la partie de trous (12a à 121) est formée dans une partie en saillie (25a à 251) prévue à une position distante d'un corps principal (2) du stratifié, et la partie en saillie (25a à 251) est amovible.

2. Procédé de fabrication d'un noyau de fer stratifié (10, 30) selon la revendication 1, **caractérisé par le fait que** la partie en saillie (25a à 251) et le corps principal (2) du laminé sont connectés l'un à l'autre au niveau d'une partie commune (8a à 81) présentant une largeur inférieure à une largeur de la partie en saillie (25a à 251) dans une direction circonférentielle du stratifié.

3. Procédé de fabrication d'un noyau de fer stratifié (10, 30) selon la revendication 2, **caractérisé par le fait que** la partie commune (8a à 81) présente une forme qui diminue progressivement vers le corps principal (2) du stratifié dans une direction de la largeur, lorsque vue dans la direction de stratification du stratifié.

4. Procédé de fabrication d'un noyau de fer stratifié (10, 30) selon l'une quelconque des revendications 1 à 3,
**caractérisé par le fait que** des parties en retrait en forme de rainure (21a, 21b), qui sont en retrait vers l'intérieur du corps principal (2) à partir d'une surface de paroi extérieure du corps principal (2), sont formées aux deux extrémités d'une partie où la partie en saillie (25a à 251) est connectée au corps principal (2) du stratifié.

5. Procédé de fabrication d'un noyau de fer stratifié (10, 30) selon l'une quelconque des revendications 1 à 4,
**caractérisé par le fait que** la partie de trous (12a à 121) est ouverte dans une extrémité et fermée dans l'autre extrémité.

6. Procédé de fabrication d'un noyau de fer stratifié (10, 30) selon l'une quelconque des revendications 1 à 5,
**caractérisé par le fait que**, lorsqu'il est prévu une partie sertie pour sertir et fixer la pluralité de plaques d'acier (10a, 10b), le nombre de parties de trous (12a à 121) est au moins égal ou supérieur au nombre de parties serties.

7. Procédé de fabrication d'un noyau de fer stratifié (10, 30) selon l'une quelconque des revendications 4 à 6,
**caractérisé par le fait que** la partie de trous (12a à 121) est prévue sur une surface circonférentielle d'une paroi extérieure du corps principal (2) du stratifié, une surface circonférentielle d'une paroi intérieure du stratifié, ou tant la surface circonférentielle de la paroi extérieure que la surface circonférentielle de la paroi intérieure.

8. Procédé de fabrication d'un noyau de fer stratifié (10, 30) selon l'une quelconque des revendications 1 à 7,
**caractérisé par le fait que** le noyau de fer stratifié (10, 30) présente des dents (11a à 111), chaque partie en saillie (25a à 251) étant disposée à l'extérieur de chaque dent (11a à 111).

9. Procédé de fabrication d'un noyau de fer stratifié (10, 30) selon l'une quelconque des revendications 1 à 8,
**caractérisé par le fait que** le noyau de fer stratifié (10, 30) est utilisé comme rotor d'un moteur ou comme stator d'un moteur.

10. Stratifié destiné à obtenir un noyau de fer stratifié (10, 30), le stratifié comprenant:
une pluralité de plaques d'acier stratifiées (10a, 10b),
une pluralité de parties de trous (12a à 121) qui s'étendent dans une direction de stratification du stratifié, qui sont situées à des positions distantes d'un corps principal (2) du stratifié et qui sont remplies d'un adhésif, la pluralité de plaques d'acier (10a, 10b) étant assemblées l'une à l'autre en imprégnant l'adhésif entre les plaques d'acier adjacentes l'une à l'autre à l'aide d'une action capillaire qui se produit entre la pluralité de plaques d'acier,
**caractérisé par le fait que**
la pluralité de parties de trou (12a à 121) sont formées dans des parties en saillie respectives (25a à 251) prévues à une position distante d'un corps principal (2) du stratifié, et les parties en saillie (25a à 251) sont amovibles.

11. Laminé selon la revendication 10, **caractérisé par le fait que** le noyau de fer stratifié (10, 30) constitue un noyau de rotor ou un noyau de stator d'un moteur.

12. Moteur **caractérisé par** le fait d'utiliser le noyau de fer stratifié (10, 30) obtenu à partir du stratifié selon la revendication 10.
